# EUROPEAN PATENT SPECIFICATION

(11) **EP 4 207 841 B1**
(45) Date of publication and mention of the grant of the patent: **16.07.2025**
(21) Application number: 22307051.7
(22) Date of filing: 27.12.2022
(51) Int. Cl.: H04W 4/80

(54) **METHOD AND APPARATUS FOR IMPLEMENTING COMMUNICATION, AND COMPUTER-READABLE MEDIUM**
VERFAHREN UND VORRICHTUNG ZUR IMPLEMENTIERUNG VON KOMMUNIKATION UND COMPUTERLESBARES MEDIUM
PROCÉDÉ ET APPAREIL DE MISE EN OEUVRE DE COMMUNICATION, ET SUPPORT LISIBLE PAR ORDINATEUR

(30) Priority: 31.12.2021 CN 202111671263
(43) Date of publication of application: 05.07.2023
(73) Proprietor: SCHNEIDER ELECTRIC INDUSTRIES SAS, 92500 Rueil-Malmaison (FR)
(72) Inventor: WU, Tuming, Shenzhen, 518000 (CN); QIAN, Jinwei, Shenzhen, 518000 (CN)
(74) Representative: Manitz Finsterwald Patent- und Rechtsanwaltspartnerschaft mbB

(56) References cited:
- KR-A- 20120 133 695
- US-A1- 2005 180 447

## Description

### FIELD

Embodiments of the present disclosure generally relate to the field of communication, and in particular, to a method and apparatus for implementing communication between terminal devices, and a computer-readable medium.

### BACKGROUND

The Internet of Things generally refers to a device system, which is capable of performing communication by means of a network. With the increasing development of the Internet of Things, sensor networks are widely used in applications such as smart homes and environmental observation. Common sensor networks provide low-cost and low-power-consumption communication based on the ZigBee technology.

At present, a smoke alarm, as a device commonly used for furniture, uses the ZigBee technology to implement communication in a network. However, due to a relatively large delay in a network based on the ZigBee technology for communication (also referred to as a ZigBee network), in the case of a fire, a network device often cannot make a response in time, thereby causing a serious hazard. Therefore, it is a very noticeable problem to realize instant messaging of such alarm devices. KR 2012 0133695 A discloses a method for providing a multicasting service in an Internet Protocol (IP) network. By using at least one of a network prefix assigned to an area where the wireless node is located and an identification of a personal area network set in the area where the wireless node is located, the wireless node can set a multicast address, and the group requesting the multicasting service may receive the multicasting service via the multicast address.

### SUMMARY

The present invention is set out in the appended claims. Embodiments of the present disclosure provide a method and apparatus for implementing communication, and a computer-readable medium.

The Summary is provided to introduce the selection of concepts in a simplified form, and the concepts will be further described below in the Detailed Description of Embodiments. The Summary is not intended to identify critical features or essential features of the present disclosure, nor is it intended to limit the scope of the present disclosure.

### BRIEF DESCRIPTION OF THE DRAWINGS

The above and other objectives, features and advantages of the present disclosure will become more apparent by means of describing exemplary embodiments of the present disclosure in more detail in conjunction with the drawings, and in the exemplary embodiments of the present disclosure, the same reference numbers generally represent the same components.
Fig. 1 illustrates a schematic diagram of the structure of a network in which an embodiment of the present disclosure may be implemented;
Fig. 2 illustrates an example signaling diagram for implementing communication according to some embodiments of the present disclosure;
Fig. 3 illustrates a flow diagram of an example method for implementing communication according to some embodiments of the present disclosure; and
Fig. 4 illustrates a schematic block diagram of an example device which may be used for implementing embodiments of the content of the present disclosure.

Throughout the drawings, the same or corresponding reference numbers represent the same or corresponding parts.

### DETAILED DESCRIPTION OF EMBODIMENTS

Preferred embodiments of the present disclosure will be described below in more detail with reference to the drawings. Although the preferred embodiments of the present disclosure are shown in the drawings, it should be understood that, the present disclosure may be implemented in various forms and should not be limited to the embodiments set forth herein. These embodiments are provided for a more thorough and complete understanding of the present disclosure on the contrary, and may fully convey the scope of the present disclosure to those skilled in the art.

The term "including" and variations thereof as used herein mean open-ended inclusions, that is, "including but not limited to". The term "or" means "and/or" unless specifically stated otherwise. The term "based on" means "at least partially based on". The terms "one example embodiment" and "one embodiment" mean "at least one example embodiment". The term "another embodiment" means "at least one additional embodiment." The terms "first", "second" and the like may refer to different or the same objects. Other explicit and implicit definitions may also be included below.

As used herein, the term "determine" encompasses a variety of actions. For example, "determine" may include operate, calculate, process, derive, investigate, search (e.g., look up in a table, database or another data structure), ascertain, etc. Further, "determine" may include receive (e.g., receive information), access (e.g., access data in a memory), etc. In addition, "determine" may include parse, select, choose, establish, etc.

As used herein, the term "terminal device" refers to any apparatus or device, which is capable of implementing functions such as information collection, information processing, information communication and decision feedback. The terminal device generally has electronic components such as a sensor and a brake, such that the terminal device may trigger a corresponding feedback action based on the collected information. Examples of the terminal devices include, but are not limited to, smoke alarms, burglar alarms, various alarms used in industrial production, and the like. For example, the terminal device may access a network provided by a network device, and communicate with the network device. Moreover, the terminal devices may also communicate with each other. Example wireless communication technologies include, but are not limited to, WiFi, ZigBee, private protocols, etc.

As used herein, the term "network device" refers to any apparatus or device, which is capable of creating or maintaining a network. The network device may have the functions of coordinating and managing the creation of the network, addition and deletion of devices, determination and distribution of keys, and/or information forwarding. For example, for a ZigBee network, the network device may include a coordinator, a router or the like.

As mentioned above, with the increasing development of the Internet of Things, in order to provide low-cost and low-power-consumption communication, the ZigBee technology is applied to many smart homes.

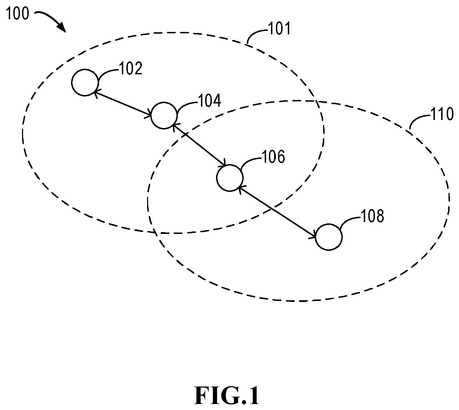

Fig. 1 illustrates a schematic diagram of the structure of a network 100 in which various embodiments of the present disclosure may be implemented.

As shown in Fig. 1, the network 100 includes a first network 101, which may be, for example, a ZigBee network. It should be understood that, this is merely exemplary and is not intended to limit the scope of the present disclosure. Hereinafter, for the convenience of description, the working principles of some embodiments will be illustrated in combination with the ZigBee network. However, the embodiments of the present disclosure are also applicable to other types of networks.

As shown in the figure, the first network 101 includes a coordinator 102, a router 104 and a first terminal device 106.

The first network 101 is created by the coordinator 102. After being powered on, the coordinator 102 performs the initialization of the first network 101. The coordinator 102 may generate an extended personal area network identifier (extended PAN ID) of the first network 101. For example, a specified extended PAN ID may be set in an application program of the coordinator. In some embodiments, the extended PAN ID may be, for example, 64 bits. For example, the extended PAN ID may be set to be a 64-bit IEEE MAC address of the coordinator 102. Then, the coordinator 102 selects, in a radio-frequency band, a channel to be used by the first network 101. The coordinator 102 may perform an energy detection scanning and select a channel with the least detected activity in the radio-frequency band. Afterwards, the coordinator 102 will generate a PAN ID for use in inter-device communication in the first network 101. In general, in order to avoid conflicts, the coordinator 102 may first monitor other network channels and identify PAN IDs of the other networks, so as to determine a random PAN ID that is not used by one other network on this basis. In some embodiments, the PAN ID may be, for example, 16 bits.

The router 104 may access the first network 101 by means of the coordinator 102. Both the coordinator 102 and the router have the function of allowing other devices to add the first network 101 therethrough. For example, the first terminal device 106 may transmit a request to access the network to the router 104, so as to connect to the first network 101. Alternatively, the first terminal device 106 may directly transmit the request to access the network to the coordinator 102, so as to connect to the first network 101.

As shown in Fig. 1, the first terminal device 106 and a second terminal device 108 constitute a second network 110. In some embodiments, the first terminal device 106 and/or the second terminal device 108 may perform broadcast communication in the second network 110. For example, the first terminal device 106 may transmit a message in a broadcast manner in the second network 110. Correspondingly, the second terminal device may receive the message broadcast by the first terminal device 106.

The first terminal device 106 and the router 104 may communicate with each other in a wired and/or wireless manner. The first terminal device 106 and the second terminal device 108 may communicate with each other in a wired and/or wireless manner. Any communication approach, which is currently known and will be developed in the future, may be used herein, and the scope of the present disclosure is not limited in this regard.

It should be understood that, the structures of the first network 101 and the second network 110 shown in Fig. 1 are merely exemplary, and should not constitute any limitation to the functions and scope of the embodiments described in the present disclosure. The number of terminal devices and routers shown in Fig. 1 is merely illustrative. For example, the first network 101 may include any suitable number of terminal devices and routers, and the second network 110 may include any suitable number of terminal devices. For example, the first network 101 may include an additional device, which communicates with the first terminal device 106 and the router 104, or the second network 110 may include an additional device, which communicates with the first terminal device 106 and the second terminal device 108.

However, as described above, for terminal devices, such as a smoke alarm, which requires an instant response to an alarm, due to a high delay of the ZigBee-based communication technology, the network device often cannot transmit an alarm message to the connected terminal device in time, which may bring a very serious hazard.

In addition, a conventional smoke alarm may implement an emergency alarm based on a level change and by means of a wired connection. In addition, some smoke alarms having no networking function may implement emergency alarms by broadcasting alarm messages based on wireless interconnection between the plurality of smoke alarms. However, such devices often require more manual operations to implement the connection. Moreover, such devices perform broadcast communication based on address codes of the devices when leaving the factory, and thus may interfere with the communication of other devices having the same address codes.

As it can be seen, in such a scenario in which an emergency alarm needs to be performed, a traditional communication method between the terminal devices often cannot avoid a relatively large delay, or requires more manual operations, and still has a potential interference problem, such that the communication quality cannot be guaranteed. At present, there is a lack of an effective method to realize timely communication between the terminal devices.

The embodiments of the present disclosure propose a solution for implementing communication between terminal devices, so as to solve one or more of the above problems and other potential problems. In this solution, a terminal device obtains, from a network device in a network (referred to as a first network), a network identifier of the first network. Then, the terminal device determines, based on the network identifier, a broadcast address for broadcast communication in another network (referred to as a second network). Furthermore, when an alarm event is determined, the terminal device broadcasts, in the second network, a message indicating the alarm event, using the broadcast address.

By means of the the following description, it will be understood that in the embodiments of the present disclosure, the broadcast address for broadcast communication in the second network can be determined based on the obtaind network address of the first network, and then a wireless interconnection is automatically formed between the terminal devices connected to the first network, so that an alarm can be issued in time when the alarm event is determined. In the solution, the uniqueness, invariance and security of the broadcast address can be guaranteed by utilizing the uniqueness of the network address of the first network, thereby reliably setting up the wireless interconnection between the terminal devices. In addition, by means of the solution, two network connections at the terminal device can be realized only by a single network access operation, thereby omitting a large number of repeated manual operations, effectively avoiding the heavy work of twice network access, and also avoiding a possible omission problem. In addition, by means of the technical solution, it is also possible to guarantee that the communication between the terminal devices can also be performed normally, when the network device does not work due to causes such as network disconnection or power failure.

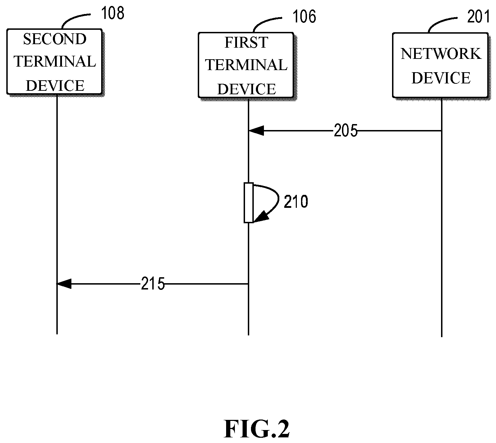

Fig. 2 illustrates an example signaling diagram for implementing communication according to some embodiments of the present disclosure. For example, a network device 201 may be implemented as the coordinator 102 or the router 104 shown in Fig. 1.

As shown in Fig. 2, the first terminal device 106 obtains (205) the network identifier of the first network 101 from the network device 201 in the first network 101. For example, the network identifier may be a PAN ID.

In some embodiments, the first terminal device 106 may receive an instruction to access a network from a user. For example, the instruction may be delivered by a key operation of the user. Then, the first terminal device 106 may discover networks by scanning channels of an associated radio-frequency band, and select a network to access, for example, based on signal intensity and the like. For example, the selected network may be the first network 101. Then, the first terminal device 106 may transmit a request for accessing the first network 101 to the network device 201 in the first network 101. The first terminal device 106 may obtain, from the network device 201, the network identifier of the first network 101 as a response to the request. For example, the first terminal device 106 may also obtain, from the network device 201, information about the network device 201, information about whether the first terminal device 106 is allowed to access the network, and other information as a response to the request. After a series of interactive operations such as information exchange and address distribution, the first terminal device 106 may access the first network 101.

As shown in Fig. 2, the first terminal device 106 determines (210), based on the network identifier, a broadcast address for broadcast communication in the second network 110. For example, the first terminal device 106 may determine, based on a PAN ID, the broadcast address for broadcast communication in the second network 110. In some embodiments, the first terminal device 106 may encode the PAN ID to generate a broadcast address of a particular number of bits. For example, a broadcast address with a length of 4 bytes may be generated by inserting some bits before or after a PAN ID with a length of 2 bytes. It should be understood by those skilled in the art that, the foregoing numerical values are merely examples, and the embodiments of the present disclosure are not limited herein.

In this way, two network connections at the terminal device can be implemented only by a single network connection operation, such that manual operations can be effectively reduced. In addition, the uniqueness, invariance and security of the broadcast address can be guaranteed by utilizing the uniqueness of the network address of the first network, thereby reliably setting up the wireless interconnection between the terminal devices.

In some embodiments, the second terminal device 108 cannot connect to the first network 101, and thus cannot obtain the broadcast address. In this case, the second terminal device 108 may obtain the broadcast address from the first terminal device 106. For example, after receiving a pairing instruction delivered by the user, for example, by means of a key operation, the first terminal device 106 and the second terminal device 108 may be configured to be in a pairing mode. According to the claimed embodiment, the second terminal device 108 transmits a request for the broadcast address to the first terminal device 106, and correspondingly, the first terminal device 106 receives the request for the broadcast address from the second terminal device 108. Correspondingly, the first terminal device 106 transmits the broadcast address to the second terminal device 108, such that the second terminal device 108 uses the broadcast address to receive a broadcast message. Other possible terminal devices in the second network 110 may also obtain the broadcast address from the first terminal device 106 in a similar manner.

As shown in Fig. 2, in response to determining an alarm event, the first terminal device 106 broadcasts (215) , in the second network 110, a message indicating the alarm event, using the broadcast address. In some embodiments, the first terminal device 106 may determine the alarm event based on a routine test instruction, which is received from the user and is used for issuing an alarm, and then broadcast the message indicating the alarm event, in the second network 110 using the broadcast address. Correspondingly, the second terminal device 108 and other possible terminal devices may receive the broadcast message using the obtaind broadcast address, thereby making a response, that is, issuing an alarm. In some embodiments, the first terminal device 106 may determine the alarm event, such as a fire, based on determining that the smoke concentration is higher than a threshold concentration and/or the temperature is higher than a threshold temperature, and then may broadcast, using the determined broadcast address, the message indicating the alarm event, to the second terminal device 108 and other possible terminal devices in the second network 110. It should be understood that, the above-mentioned threshold concentration and threshold temperature may be set to any value according to actual application scenarios, and the scope of the present disclosure is not limited in this regard. Correspondingly, the second terminal device 108 and other possible terminal devices may receive the broadcast message using the obtaind broadcast address, thereby making a response in time, for example, issuing an alarm.

In some embodiments, the second terminal device 108 may broadcast the message indicating the alarm event in the second network 110 after determining the alarm event. Correspondingly, the first terminal device 106 and other possible terminal devices in the second network 110 may receive the broadcast message, thereby making a response.

In this way, when the alarm event occurs, an alarm can be transmitted between the terminal devices in time, thereby effectively avoiding a relatively large loss.

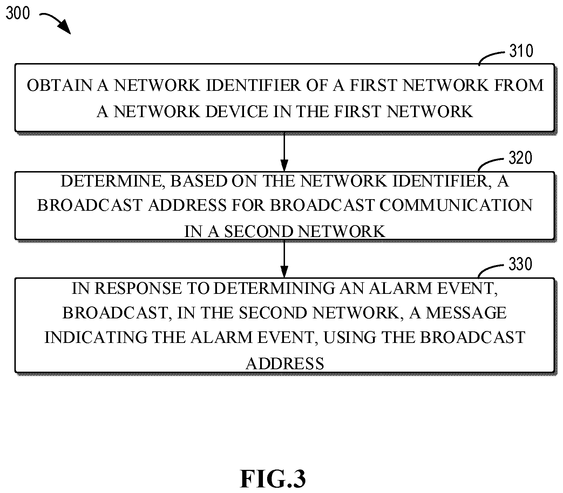

Fig. 3 illustrates a flow diagram of an example method 300 for implementing communication according to some embodiments of the present disclosure. The method 300 may be executed, for example, by the first terminal device 106 as shown in Fig. 1. It should be understood that, the method 300 may also be executed by other suitable devices or apparatuses. The method 300 may include additional actions not shown and/or may omit the illustrated actions, and the scope of the present disclosure is not limited in this regard. The method 300 is described in detail below in conjunction with Fig. 1 and Fig. 2.

At block 310, the first terminal device 106 obtains a network identifier of a first network 101 from a network device 201 in the first network 101. At block 320, the first terminal device 106 determines, based on the network identifier, a broadcast address for broadcast communication in a second network 110. At block 330, in response to determining an alarm event, the first terminal device 106 broadcasts, in the second network 110, a message indicating the alarm event, using the broadcast address.

In some embodiments, the first terminal device 106 may transmit a request for accessing the first network 101 to the network device 201 in the first network 101; and obtain the network identifier of the first network 101 from the network device 201 as a response to the request.

In some embodiments, the first terminal device 106 may also receive a request for the broadcast address from the second terminal device 108. The first terminal device 106 and the second terminal device 108 are paired devices. Then, the first terminal device 106 may also transmit the broadcast address to the second terminal device 108, for the second terminal device 108 to receive the message indicating the alarm event, using the broadcast address.

In some embodiments, the first network 101 is a ZigBee network.

In some embodiments, the first terminal device 106 and/or the second terminal device 108 is a smoke alarm.

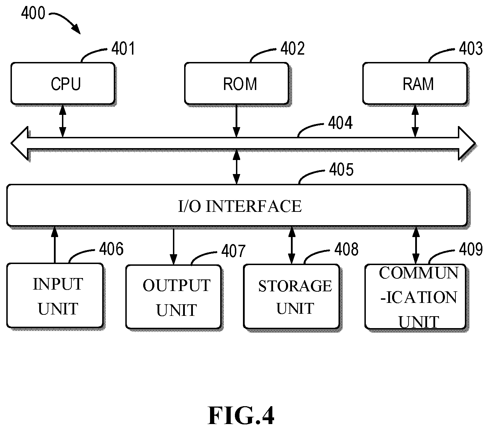

Fig. 4 illustrates a schematic block diagram of an example device 400 which may be used for implementing embodiments of the content of the present disclosure. For example, as shown in Fig. 1, the coordinator 102, the router 104, the first terminal device 106 or the second terminal device 108 may be implemented by the device 400.

As shown in Fig. 4, the device 400 includes a central processing unit (CPU) 401, which may execute various appropriate actions and processing according to computer program instructions that are stored in a read-only memory (ROM) 402 or computer program instructions that are loaded from a storage unit 408 into a random access memory (RAM) 403. In the RAM 403, various programs and data necessary for the operations of the device 400 may also be stored. The CPU 401, the ROM 402 and the RAM 403 are connected to each other by means of a bus 404. An input/output (I/O) interface 405 is also connected to the bus 404.

A plurality of components in the device 400 are connected to the I/O interface 405, including: an input unit 406, such as a keyboard and a mouse; an output unit 407, such as various types of displays and loudspeakers; a storage unit 408, such as a magnetic disk and an optical disk; and a communication unit 409, such as a network card, a modem and a wireless communication transceiver. The communication unit 409 allows the device 400 to exchange information/data with other devices by means of a computer network such as the Internet and/or various telecommunication networks.

The various processes and processing described above, for example, the method 300, may be executed by the processing unit 401. For example, in some embodiments, the method 300 may be implemented as a computer software program, which is tangibly contained in a machine-readable medium, such as the storage unit 408. In some embodiments, part or all of the computer programs may be loaded and/or installed on the device 400 via the ROM 402 and/or the communication unit 409. When the computer programs are loaded into the RAM 403 and executed by the CPU 401, one or more actions of the method 300 described above may be executed.

The present disclosure may be a method, an apparatus, a system and/or a computer program product. The computer program product may include a computer-readable storage medium, having computer-readable program instructions loaded thereon for executing various aspects of the present disclosure.

The computer-readable storage medium may be a tangible device, which may hold and store instructions for use by an instruction execution device. The computer-readable storage medium may be, for example, but is not limited to, an electrical storage device, a magnetic storage device, an optical storage device, an electromagnetic storage device, a semiconductor storage device, or any suitable combination of the foregoing devices. More specific examples (non-exhaustive list) of the computer-readable storage medium include: a portable computer disk, a hard disk, a random access memory (RAM), a read-only memory (ROM), an erasable programmable read-only memory (EPROM) or flash memory), a static random access memory (SRAM), a portable compact disk read-only memory (CD-ROM), a digital versatile disk (DVD), a memory stick, a floppy disk, a mechanical encoding device, such as a protrusion structure in a punched card or groove with instructions stored thereon, and any suitable combinations thereof. The computer-readable storage medium, as used herein, is not to be interpreted as a transient signal per se, such as radio waves or other freely propagating electromagnetic waves, electromagnetic waves propagating via waveguides or other transmission media (e.g., light pulses propagating via optical fiber cables), or electrical signals transmitted via electrical wires.

The computer-readable program instructions described herein may be downloaded from the computer-readable storage medium into various computing/processing devices, or downloaded into an external computer or external storage device via a network, such as the Internet, a local area network, a wide area network, and/or a wireless network. The network may include a copper transmission cable, optical fiber transmission, wireless transmission, a router, a firewall, a switch, a gateway computer and/or an edge server. A network adapter card or network interface in each computing/processing device receives the computer-readable program instructions from the network, and forwards the computer-readable program instructions for storage in the computer-readable storage medium in each computing/processing device.

The computer program instructions used for executing the operations of the present disclosure may be assembly instructions, instruction set architecture (ISA) instructions, machine instructions, machine-related instructions, microcodes, firmware instructions, state setting data, or source codes or target codes compiled in any combination of one or more programming languages, the programming languages include object-oriented programming languages such as Smalltalk and C++, and conventional procedural programming languages such as a "C" language or similar programming languages. The computer-readable program instructions may be completely executed on a user computer, partly executed on the user computer, executed as a stand-alone software package, partly executed on the user computer and partly executed on a remote computer, or completely executed on a remote computer or a server. In the case where the remote computer is involved, the remote computer may be connected to the user computer through any kind of networks, including a local area network (LAN) or a wide area network (WAN), or, it may be connected to an external computer (for example, connected via the Internet by using an Internet service provider). In some embodiments, an electronic circuit, such as a programmable logic circuit, a field programmable gate array (FPGA) or a programmable logic array (PLA), may be customized by using the state information of the computer-readable program instructions. The electronic circuit may execute the computer-readable program instructions, so as to implement various aspects of the present disclosure.

The various aspects of the present disclosure are described herein with reference to flow diagrams and/or block diagrams of the method, the apparatus, system and the computer program product according to the embodiments of the present disclosure. It should be understood that, each block of the flow diagrams and/or the block diagrams and combinations of blocks in the flow diagrams and/or the block diagrams may be implemented by the computer-readable program instructions.

These computer-readable program instructions may be provided for a general-purpose computer, a special-purpose computer or processing units of other programmable data processing apparatuses, so as to generate a machine, such that these instructions, when executed by the computers or the processing units of the other programmable data processing apparatuses, generate apparatuses for implementing specified functions/actions in one or more blocks of the flow diagrams and/or the block diagrams. These computer-readable program instructions may also be stored in the computer-readable storage medium, these instructions cause the computers, the programmable data processing apparatuses and/or other devices to work in particular manners, such that the computer-readable storage medium storing the instructions includes a manufacture, which includes instructions for implementing the various aspects of the specified functions/actions in one or more blocks of the flow diagrams and/or the block diagrams.

These computer-readable program instructions may also be loaded on the computers, the other programmable data processing apparatuses or the other devices, so as to execute a series of operation steps on the computers, the other programmable data processing apparatuses or the other devices to produce processes implemented by the computers, such that the instructions executed on the computers, the other programmable data processing apparatuses or the other devices implement the specified functions/actions in one or more blocks of the flow diagrams and/or the block diagrams.

The flow diagrams and the block diagrams in the drawings show system architectures, functions and operations, which may be implemented by the system, the method and the computer program product according to a plurality of embodiments of the present disclosure. In this regard, each block in the flow diagrams and the block diagrams may represent a part of a module, a program segment or an instruction, and the part of the module, the program segment or the instruction contains one or more executable instructions for implementing specified logical functions. In some alternative implementations, the functions marked in the blocks may also occur in a different order from the order marked in the drawings. For example, two consecutive blocks may actually be executed substantially in parallel, or they may sometimes be executed in a reverse order, depending on the functions involved. It should also be noted that, each block in the block diagrams and/or the flow diagrams, and the combination of the blocks in the block diagrams and/or the flow diagrams may be implemented by a dedicated hardware-based system, which is used for executing the specified functions or actions, or it may be implemented by a combination of dedicated hardware and computer instructions.

The various embodiments of the present disclosure have been described above, and the above description is exemplary, not exhaustive, and is not limited to the various disclosed embodiments. Without departing from the scope of the invention set out in the claims, many modifications and changes are obvious to those ordinary skilled in the art. The choice of the terms used herein is intended to best explain the principles of various embodiments, practical applications, or improvements to the technology in the market, or to enable other ordinary skilled in the art to understand the various embodiments disclosed herein.

## Claims

1. A method for implementing communication, comprising
obtaining (310), by a first terminal device (106) in a second network (110), a network identifier, PAN ID, of a first network (101) from a network device (102; 104; 201) in the first network (101);
determining (320), by the first terminal device (106), based on the network identifier, a broadcast address for broadcast communication in the second network (110);
in response to determining an alarm event, broadcasting (330), by the first terminal device (106), in the second network (110), a message indicating the alarm event, using the broadcast address; the method being **characterised by** further comprising:
receiving a request for the broadcast address from a second terminal device (108) in the second network (110), the first terminal device and the second terminal device being paired devices; and
transmitting the broadcast address to the second terminal device, for the second terminal device to receive the message indicating the alarm event, using the broadcast address.

2. The method of claim 1, wherein obtaining the network identifier, PAN ID, of the first network (101) from the network device (102; 104; 201) in the first network comprises:
transmitting a request for accessing the first network to the network device in the first network; and
obtaining the network identifier of the first network from the network device as a response to the request.

3. The method of any of claims 1-2, wherein the first network (101) is a ZigBee network.

4. The method of any of claims 1-3, wherein the first terminal device (106) and/or the second terminal device (108) is a smoke alarm.

5. An electronic apparatus, comprising:
at least one memory;
at least one processor; and
a communication module, configured to:
obtain a network identifier, PAN ID, of a first network (101) from a network device (102; 104; 201) in the first network;
determine, based on the network identifier, a broadcast address for broadcast communication in a second network (110); and
in response to determining an alarm event, broadcast, in the second network (110), a message indicating the alarm event, using the broadcast address,
wherein the electronic apparatus is a first terminal device (106) in the second network (110), and
the electronic apparatus is **characterised in that** the communication module is further configured to:
receive a request for the broadcast address from a second terminal device (108) in the second network, the first terminal device and the second terminal device being paired devices; and
transmit the broadcast address to the second terminal device, for the second terminal device to receive the message indicating the alarm event, using the broadcast address.

6. The electronic apparatus of claim 5, wherein obtaining the network identifier of the first network from the network device in the first network comprises:
transmitting a request for accessing the first network to the network device in the first network; and
obtaining the network identifier of the first network from the network device as a response to the request.

7. The electronic apparatus of any of claims 5-6, wherein the first network (101) is a ZigBee network.

8. The electronic apparatus of any of claims 5, wherein the first terminal device (106) and/or the second terminal device (108) is a smoke alarm.

9. A computer-readable storage medium, storing a computer program code thereon, the computer program code, when executed by an apparatus, causing the apparatus to execute the method of any of claims 1-4.

## Patentansprüche

1. Verfahren zur Realisierung einer Kommunikation, das umfasst, dass:
durch eine erste Endgeräteinrichtung (106) in einem zweiten Netzwerk (110) ein Netzwerkidentifikator, PAN ID, eines ersten Netzwerks (101) von einer Netzwerkeinrichtung (102; 104; 201) in dem ersten Netzwerk (101) erhalten wird (310);
durch die erste Endgeräteinrichtung (106) basierend auf dem Netzwerkidentifikator eine Rundsendungsadresse für eine Rundsendungskommunikation in dem zweiten Netzwerk (110) ermittelt wird (320);
in Ansprechen auf das Ermitteln eines Alarmereignisses durch die erste Endgeräteinrichtung (106) in dem zweiten Netzwerk (110) eine Nachricht, die das Alarmereignis angibt, unter Verwendung der Rundsendungsadresse rundgesendet wird (330);
wobei das Verfahren **dadurch gekennzeichnet ist, dass** es ferner umfasst, dass:
eine Anforderung hinsichtlich der Rundsendungsadresse von einer zweiten Endgeräteinrichtung (108) in dem zweiten Netzwerk (110) empfangen wird,
wobei die erste Endgeräteinrichtung und die zweite Endgeräteinrichtung gepaarte Einrichtungen sind; und
die Rundsendungsadresse an die zweite Endgeräteinrichtung übertragen wird, damit die zweite Endgeräteinrichtung die Nachricht, die das Alarmereignis angibt, unter Verwendung der Rundsendungsadresse empfangen kann.

2. Verfahren nach Anspruch 1, wobei das Erhalten des Netzwerkidentifikators, PAN ID, des ersten Netzwerks (101) von der Netzwerkeinrichtung (102; 104; 201) in dem ersten Netzwerk umfasst, dass:
eine Anforderung hinsichtlich eines Zugreifens auf das erste Netzwerk an die Netzwerkeinrichtung in dem ersten Netzwerk übertragen wird; und
der Netzwerkidentifikator des ersten Netzwerks von der Netzwerkeinrichtung als Reaktion auf die Anforderung erhalten wird.

3. Verfahren nach einem der Ansprüche 1-2, wobei das erste Netzwerk (101) ein ZigBee-Netzwerk ist.

4. Verfahren nach einem der Ansprüche 1-3, wobei die erste Endgeräteinrichtung (106) und/oder die zweite Endgeräteinrichtung (108) ein Rauchmelder ist.

5. Elektronische Vorrichtung, umfassend:
zumindest einen Speicher;
zumindest einen Prozessor; und
ein Kommunikationsmodul, das ausgestaltet ist, um:
einen Netzwerkidentifikator, PAN ID, eines ersten Netzwerks (101) von einer Netzwerkeinrichtung (102; 104; 201) in dem ersten Netzwerk zu erhalten;
basierend auf dem Netzwerkidentifikator eine Rundsendungsadresse für eine Rundsendungskommunikation in einem zweiten Netzwerk (110) zu ermitteln; und
in Ansprechen auf das Ermitteln eines Alarmereignisses in dem zweiten Netzwerk (110) eine Nachricht, die das Alarmereignis angibt, unter Verwendung der Rundsendungsadresse rundzusenden,
wobei die elektronische Vorrichtung eine erste Endgeräteinrichtung (106) in dem zweiten Netzwerk (110) ist, und
die elektronische Vorrichtung **dadurch gekennzeichnet ist, dass** das Kommunikationsmodul ferner ausgestaltet ist, um:
eine Anforderung hinsichtlich der Rundsendungsadresse von einer zweiten Endgeräteinrichtung (108) in dem zweiten Netzwerk zu empfangen, wobei die erste Endgeräteinrichtung und die zweite Endgeräteinrichtung gepaarte Einrichtungen sind; und
die Rundsendungsadresse an die zweite Endgeräteinrichtung zu übertragen, damit die zweite Endgeräteinrichtung die Nachricht, die das Alarmereignis angibt, unter Verwendung der Rundsendungsadresse empfangen kann.

6. Elektronische Vorrichtung nach Anspruch 5, wobei das Erhalten des Netzwerkidentifikators des ersten Netzwerks von der Netzwerkeinrichtung in dem ersten Netzwerk umfasst, dass:
eine Anforderung hinsichtlich eines Zugreifens auf das erste Netzwerk an die Netzwerkeinrichtung in dem ersten Netzwerk übertragen wird; und
der Netzwerkidentifikator des ersten Netzwerks von der Netzwerkeinrichtung als Reaktion auf die Anforderung erhalten wird.

7. Elektronische Vorrichtung nach einem der Ansprüche 5-6, wobei das erste Netzwerk (101) ein ZigBee-Netzwerk ist.

8. Elektronische Vorrichtung nach einem der Ansprüche 5, wobei die erste Endgeräteinrichtung (106) und/oder die zweite Endgeräteinrichtung (108) ein Rauchmelder ist.

9. Von einem Computer lesbares Speichermedium, auf dem ein Computerprogrammcode gespeichert ist, wobei der Computerprogrammcode, wenn er durch eine Vorrichtung ausgeführt wird, bewirkt, dass die Vorrichtung das Verfahren nach einem der Ansprüche 1-4 ausführt.

## Revendications

1. Procédé de mise en œuvre d'une communication, consistant à :
obtenir (310), par un premier dispositif terminal (106) dans un second réseau (110), un identifiant de réseau, PAN ID, d'un premier réseau (101) à partir d'un dispositif de réseau (102 ; 104 ; 201) dans le premier réseau (101) ;
déterminer (320), par le premier dispositif terminal (106), sur la base de l'identifiant de réseau, une adresse de diffusion pour la communication par diffusion dans le second réseau (110) ;
en réponse à la détermination d'un événement d'alarme, diffuser (330), par le premier dispositif terminal (106), dans le second réseau (110), un message indiquant l'événement d'alarme, en utilisant l'adresse de diffusion ;
le procédé étant **caractérisé en ce qu'**il consiste en outre à :
recevoir une demande d'adresse de diffusion provenant d'un second dispositif terminal (108) dans le second réseau (110), le premier dispositif terminal et le second dispositif terminal étant des dispositifs appairés ; et
transmettre l'adresse de diffusion au second dispositif terminal, afin que le second dispositif terminal reçoive le message indiquant l'événement d'alarme, en utilisant l'adresse de diffusion.

2. Procédé selon la revendication 1, dans lequel obtenir l'identifiant de réseau, PAN ID, du premier réseau (101) à partir du dispositif de réseau (102 ; 104 ; 201) dans le premier réseau consiste à :
transmettre une demande d'accès au premier réseau au dispositif de réseau dans le premier réseau ; et
obtenir l'identifiant de réseau du premier réseau à partir du dispositif de réseau en réponse à la demande.

3. Procédé selon l'une quelconque des revendications 1 à 2, dans lequel le premier réseau (101) est un réseau ZigBee.

4. Procédé selon l'une quelconque des revendications 1 à 3, dans lequel le premier dispositif terminal (106) et/ou le second dispositif terminal (108) est un détecteur de fumée.

5. Appareil électronique, comprenant :
au moins une mémoire ;
au moins un processeur ; et
un module de communication, configuré pour :
obtenir un identifiant de réseau, PAN ID, d'un premier réseau (101) à partir d'un dispositif de réseau (102 ; 104 ; 201) dans le premier réseau ;
déterminer, sur la base de l'identifiant de réseau, une adresse de diffusion pour la communication par diffusion dans un second réseau (110) ; et
en réponse à la détermination d'un événement d'alarme, diffuser, dans le second réseau (110), un message indiquant l'événement d'alarme, en utilisant l'adresse de diffusion,
dans lequel l'appareil électronique est un premier dispositif terminal (106) dans le second réseau (110), et
l'appareil électronique est **caractérisé en ce que**
le module de communication est en outre configuré pour :
recevoir une demande d'adresse de diffusion provenant d'un second dispositif terminal (108) dans le second réseau, le premier dispositif terminal et le second dispositif terminal étant des dispositifs appairés ; et
transmettre l'adresse de diffusion au second dispositif terminal, afin que le second dispositif terminal reçoive le message indiquant l'événement d'alarme, en utilisant l'adresse de diffusion.

6. Appareil électronique selon la revendication 5, dans lequel obtenir l'identifiant de réseau du premier réseau à partir du dispositif de réseau dans le premier réseau consiste à :
transmettre une demande d'accès au premier réseau au dispositif de réseau dans le premier réseau ; et
obtenir l'identifiant de réseau du premier réseau à partir du dispositif de réseau en réponse à la demande.

7. Appareil électronique selon l'une quelconque des revendications 5 à 6, dans lequel le premier réseau (101) est un réseau ZigBee.

8. Appareil électronique selon l'une quelconque des revendications 5, dans lequel le premier dispositif terminal (106) et/ou le second dispositif terminal (108) est un détecteur de fumée.

9. Support de stockage lisible par ordinateur, stockant un code de programme informatique, le code de programme informatique, lorsqu'il est exécuté par un appareil, amenant l'appareil à exécuter le procédé selon l'une quelconque des revendications 1 à 4.
